(19) **Europäisches Patentamt European Patent Office Office européen des brevets**

(11) **EP 3 339 599 B1**

(12) **EUROPEAN PATENT SPECIFICATION**

(45) Date of publication and mention
of the grant of the patent:
**18.09.2019 Bulletin 2019/38**

(51) Int Cl.:
*F01N 13/18* (2010.01)     *F16L 27/10* (2006.01)
*F16L 27/111* (2006.01)    *F16L 51/02* (2006.01)

(21) Application number: **16206725.0**

(22) Date of filing: **23.12.2016**

(54) **BELLOWS MEMBER**

WELLROHR

TUBE ONDULÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.06.2018 Bulletin 2018/26**

(73) Proprietor: **Sjm Co., Ltd.
Kyungki Province 425-100 (KR)**

(72) Inventors:
• **WEBEL, Uwe
76877 Offenbach (DE)**

• **LEE, Jae Kwang
67065 Ludwigshafen (DE)**

(74) Representative: **Grünecker Patent- und
Rechtsanwälte
PartG mbB
Leopoldstraße 4
80802 München (DE)**

(56) References cited:
**EP-A1- 2 450 546     JP-A- H08 303 240
JP-A- H09 209 748     JP-A- 2006 336 587**

## Description

The present invention relates to a metallic bellows member for connecting components along a combustion engine exhaust path in a flexible, gas tight manner.

Such a device is known from, for example, DE 29 520 430 U1, which discloses a bellows member made of a thin metallic material and cylindrically corrugated for absorbing the deformation due to the expansion and contraction of the exhaust pipe. In DE 29 520 430 U1, the bellows is used to form flexible conduit element for connecting exhaust components in an exhaust path of a vehicle. Similar metallic bellows members are disclosed in JP 2006 336587 A, EP 2 450 546 A1, JP H08 303240 A and JP H09 208748 A.

In use, such a bellows member may be subject to aggressive high-temperature gases from the exhaust as well as distortion (strain) caused by vibration and relative movement between the two exhaust components to which the ends of the bellows member are connected. These conditions encourage the growth of cracks in the metallic material of the bellows member, which can eventually lead to the integrity of the bellows member being ruined.

In order to ensure that such a bellows member provides adequate service life, the size of the bellows member may be increased so that strain caused by relative movement between the two exhaust components is reduced. Higher durability materials may also be used for the metallic bellows member. Crack growth is thus inhibited so that the service life is increased.

It is an object of the present invention to efficiently further improve the service life of the bellows member.

In order to address this problem, the inventors considered the function and behavior of the bellows member when subject to relative movement between the two exhaust components to which the ends of the bellows member are connected. In particular, the inventors considered that the relative movement could cause deformation of the bellows member in the form of compression, extension, bending and/or lateral shear. The inventors conceived of a simplified model of the bellows member to give insight into this behavior.

Specifically, the inventors approximated the flat portions of the bellows that conform approximately to the radial plane as annular diaphragms.

Then, the inventors approximated the curved groove and ridge portions at either end of these flat portions as inner half toroidal shells and outer half toroidal shells, respectively.

Thus, the inventors conceived of an approximation of the bellows member using an alternating series of inner and outer half toroidal shells connected by annular diaphragms, the inner circumference of an annular diaphragm being rigidly connected to an edge of an inner toroidal shell, and the outer circumference of the annular diaphragm being rigidly connected to an edge of an adjacent outer toroidal shell.

It was perceived that because the annular diaphragms are relatively flat and do not extend in the axial direction, they can undergo relatively large distortions in the form of curvature and rotation about the circumferential axes, without generating high hoop or meridian stresses.

On the other hand, the half toroidal shells change from being aligned with the radial plane at the edges, to being aligned with the cylindrical plane near the axial midpoint. Where the half toroidal shells extend in the axial direction (i.e. along the cylindrical plane) curvature and rotation about the circumferential axes generates large radial displacements and thus high hoop stresses. Thus, the resistance to curvature and rotation in the toroidal shells increases when moving along the curve of the toroidal shell from the edges to the axial midpoint.

When studying this model of the bellows member, the inventors noted that the inner toroidal shell has a smaller diameter about the bellows member axis than the outer toroidal shell. The inventors also perceived that this smaller diameter increases resistance to displacement and bending. In particular, it was perceived that the smaller diameter increases the stresses caused by radial displacement, thereby also increasing the resistance to curvature and rotation about a circumference. Thus it was perceived that an inner half toroidal shell may be stiffer than a comparable outer half toroidal shell.

By considering changes to the geometry of the forces as the bellows member is deformed, the inventors perceived that this difference in stiffness could create higher stress concentrations around the inner toroidal shell.

Specifically, the inventors perceived that when the bellows member is deformed, relative axial displacement between adjacent inner and outer toroidal shells causes the annular diaphragms to rotate about a circumference. In particular, along a circumference near a radial midpoint of the annular diaphragm, an opposing force between the inner and outer toroidal shells generates a stress along a meridian. Moving away from this point toward a circumferential edge of the annular spring, the annular diaphragm curves so as to align with the edge of the half toroidal shell. This curvature develops in conjunction with a bending moment as the annular diaphragm curves, rotates and extends away from alignment with the opposing force. The toroidal shells are also able to curve so that their edges rotate to align with the circumferential edges of the annular spring. The bending moment is righted in the half toroidal shell as radial components of the opposing force are transferred to hoop stresses.

From this simplified model of the bellows member, the inventors deduced that when the edge of the toroidal shell rotates closer to alignment with the opposing force, less curvature and eccentricity develops in the annular diaphragm, so that a bending moment is reduced. On the other hand, when the edge of the toroidal shell does not rotate closer to alignment with the opposing force, more curvature and bending moment is generated in the annular diaphragm.

Thus, the inventors deduced that the higher stiffness of the inner half toroidal shell can increase a bending moment near where the annular diaphragm connects to the inner half toroidal shell. This higher bending moment can create higher stresses and distortional energy which can exacerbate the development of cracks and hasten the failure of the bellows member.

Then, the inventors perceived that this higher bending moment and its detrimental effects on service life might be reduced by increasing the flexibility of the inner half toroidal shell.

To this end, the inventors conceived of increasing the radius of curvature the inner half toroidal shells along a meridian plane. This would increase the size of the inner half toroidal shells in an axial direction, allowing the edges of the inner half toroidal shell to be brought closer to alignment with the opposing force and thereby reducing the bending moment where the annular diaphragm connects to the inner half toroidal shell. On the other hand, the outer half toroidal shell already allows its edges to be brought closer to alignment with the opposing force, therefore the radius of curvature the outer half toroidal shells along a meridian plane need not be increased. An increase in the size of the outer toroidal shells in an axial direction would then be avoided. Thus, service life might be improved whilst an increase in size of the bellows member might be minimized.

Implementing this concept in an actual bellows member for flexibly connecting components along a combustion engine exhaust path, the curvature along a meridian in the groove corrugations is reduced in comparison to that in the ridge corrugations. As a result, service life may be increased while an increase in axial size is suppressed.

Thus, the inventors conceived of the invention defined in independent claim 1. Advantageous embodiments are set out in the dependent claims.

Fig. 1 shows a flexible conduit element for an exhaust system of a vehicle in a cross section, and which comprises a bellows member

Fig. 2 is a detailed schematic cross section of a portion of a bellows member along a meridian plane.

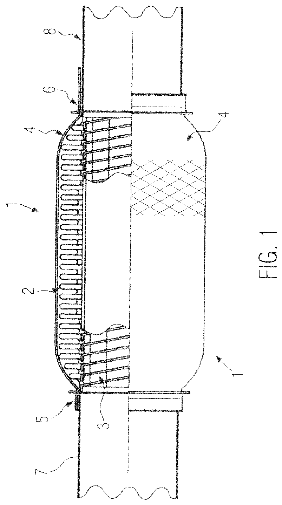

Fig. 1 shows a flexible conduit element 1 of an exhaust system of a vehicle in a cross section. The flexible conduit element comprises a metal bellows member 2, preferably an inner flexible hose 3, and an outer mesh 4. The bellows member, the inner hose and the mesh are held together at their ends by rings 5 and 6 in a flexible manner. The upstream side portion of an exhaust pipe is referred to with reference numeral 7 and the downstream side portion of the exhaust pipe is referred to with reference numeral 8. Both portions of the exhaust pipe are only schematically shown. They are both connected in a flexible manner through the flexible conduit element. Exhaust is guided from the combustion engine from the upstream side towards the downstream side through the flexible conduit element.

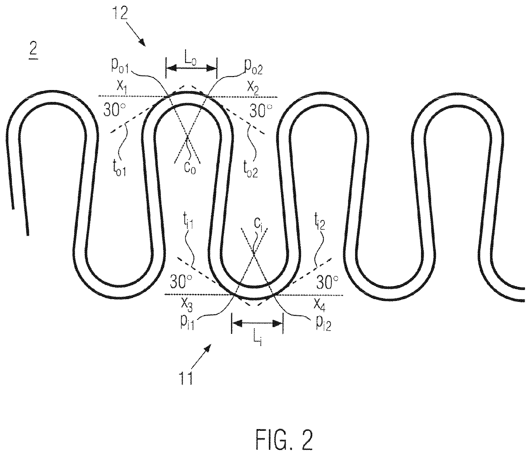

Fig 2 shows a detailed schematic cross section of a portion of a bellows member, and depicts the relevant measurement points and distances that define the invention. It should be noted that lines $x_1$, $x_2$, $x_3$ and $x_4$ represent lines parallel to the axis of the bellows member

The invention may be implemented in a metallic bellows member 2 for connecting components along a combustion engine exhaust path in a flexible, gas tight manner. Such a bellows member 2 is formed from thin metallic material. The material is typically a corrosion resistant metal such as an austenitic stainless steel or a high nickel alloy. The material may also be selected based on other considerations such as cost, formability and durability. The material is typically less than 1.0mm thick, and may preferably be 0.15 and 0.25mm thick. The shape of the bellows member 2 is typically formed through cold forming of a cylindrical tube of the material. This forming may be achieved through various known means, including hydroforming and spinning.

End portions of the bellows member 2 may be approximately cylindrical to facilitate secure and gas tight attachment to adjacent exhaust components 7, 8. Between the end portions there is at least one flexible portion of the bellows member 2 comprising corrugations 11, 12 that may be cylindrical or helical. A meridian of the bellows member 2 in the flexible portion follows an alternating series of inner and outer corrugations 11, 12. The inner corrugations 11 are shaped as grooves, the outer corrugations 12 as ridges.

The dimensions of each inner corrugation 11 and each adjacent outer corrugation 12 in a plurality of adjacent corrugations 11, 12 in the flexible portion satisfy the equation $A = L_o/L_i$ where:

$L_i$ is an axial distance measured from a first inner measurement point $p_{i1}$ on the inner corrugation 11 where a tangent $t_{i1}$ to a meridian along the bellows member 2 extends at 30 degrees to the axis of the bellows member 2, to a second inner measurement point $p_{i2}$ on the inner corrugation 11 where a tangent $t_{i2}$ to the meridian extends at -30 degrees to the axis of the bellows member 2;

$L_o$ is an axial distance measured from a first outer measurement point $p_{o1}$ on the outer corrugation 12 where a tangent $t_{o1}$ to the meridian extends at 30 degrees to the axis of the bellows member 2, to a second outer measurement point $p_{o1}$ on the outer corrugation 12 where a tangent $t_{o2}$ to the meridian extends at -30 degrees to the axis of the bellows member 2; and

A has a value below 0.9.

By configuring the inner and outer corrugations 11, 12 with these relative dimensions, the strain experienced around the inner corrugation 11 may be reduced so as to be comparable to that experienced around the outer corrugation 12. The service life of the bellows member 2 may thus be increased while suppressing an increase in the axial length of the bellows member 2.

In this regard it is noted that the portions of the corrugations between the measurement points $p_{i1}$, $p_{i2}$; $p_{i1}$, $p_{i2}$ are the stiffer portions of the bellows member 2. By increasing the distance between the first and second inner measurement points $p_{i1}$, $p_{i2}$, the curvature in this portion can be reduced and the stiffness decreased in a manner that efficiently eases the resistance of the inner corrugation 12 to rotation in portions of the bellows member between the inner and outer corrugations 11, 12. Thus, portions of the bellows member 2 may be more easily closely aligned with an opposing force that develops between the inner and outer corrugations 11,12, and thus radial components of the opposing force may be more efficiently transferred to hoop stresses in the inner corrugation 11 without generating an excessive bending moment.

The technical effect may be achieved to at least some extent for any case where the distance $L_i$ is greater than $L_o$, though the effect is more pronounced when the value of A is less than 0.9.

It is preferable that the value of A is greater than 0.4. In such a configuration, an increase in the length of the bellows member 2 can be more effectively suppressed.

It is preferable that the value of A is less than 0.8. In such a configuration, an increase in the service life of the bellows member 2 can be more pronounced.

It is preferable that the value of A is greater than 0.6. In such a configuration, an increase in the length of the bellows member 2 a flexible connection in an exhaust system of a vehicle can be more effectively suppressed.

It is preferable that the slope of the meridian changes smoothly and monotonically between the first and second inner measurement points $p_{i1}$, $p_{i2}$, and between the first and second outer measurement points $p_{o1}$, $p_{o2}$. This smoothness assists distributing the transfer of the opposing force to hoop stresses over a wider portion of the inner corrugation 11 or the outer corrugation 12, such that bending moment and stress concentrations are suppressed.

It is preferable that between the first and second inner measurement points $p_{i1}$, $p_{i2}$, the meridian does not come within a minimum inner radial distance from an inner center point $c_i$, or extend beyond a maximum inner radial distance from the inner center point $c_i$, where:

the inner center point $c_i$ is where a first inner radius extending orthogonal to the meridian at the first inner measurement point $p_{i1}$ intersects a second inner radius extending orthogonal to the meridian at the second inner measurement point $p_{i2}$,

the minimum inner radial distance is 85% of the distance from the first inner measurement point $p_{i1}$ to the inner center point $c_i$; and

the maximum inner radial distance is 110% of the distance from the first inner measurement point $p_{i1}$ to the inner center point $c_i$.

This assists achieving an appropriate curvature and rotation profile in the region between two inner measurement points $p_{i1}$, $p_{i2}$, so that an appropriate stiffness of the inner corrugation may be more readily attained whilst suppressing bending moment and stress concentrations.

It is preferable that between the first and second outer measurement points $p_{o1}$, $p_{o2}$, the meridian does not come within a minimum outer radial distance from an outer center point $c_o$, or extend beyond a maximum outer radial distance from the outer center point $c_o$, where:

the outer center point $c_o$ is where a first outer radius extending orthogonal to the meridian at the first outer measurement point $p_{o1}$ intersects a second outer radius extending orthogonal to the meridian at the second outer measurement point $p_{o2}$,

the minimum outer radial distance is 85% of the distance from the first outer measurement point $p_{o1}$ to the outer center point $c_o$; and

the maximum outer radial distance is 110% of the distance from the first outer measurement point $p_{o1}$ to the outer center point $c_o$.

This assists achieving an appropriate curvature and rotation profile in the region between two outer measurement points $p_{o1}$, $p_{o2}$, so that an appropriate stiffness of the outer corrugation may be more readily attained whilst suppressing bending moment and stress concentrations.

It is preferable that the plurality of adjacent corrugations 11, 12 includes at least two inner corrugations 11 and two outer corrugations 12. It is preferable that a majority of the corrugations in the bellows member 2 conform to the geometry defined in the invention. Generally, the greater the number of corrugations that conform to the geometry defined by the invention, the greater the extent to which the advantages of the geometry can be exploited.

The greater the proportional difference in the diameters of the inner and outer corrugations 11, 12 about the bellows member axis, the greater the stiffness differs. Thus, the advantages of the present invention become more and more pronounced as the diameter of the outer corrugation 12 increases relative to diameter of the inner corrugation 11. Therefore, it is preferable that the closest distance between the inner corrugation 11 and the axis of the bellows member 2 less than 85% of the furthest distance between the outer corrugation 12 and the axis of the bellows member 2.

## Claims

1. A bellows member (2) for a flexible connection in an exhaust system, being made from thin metal material and corrugated for absorbing axial and lateral deformation, **where,** in a relaxed state of the bellows member (2), the dimensions of each inner corrugation (11) and each adjacent outer corrugation (12) in a plurality of adjacent corrugations (11, 12) satisfy the equation $A = L_o/L_i$
   where:

   $L_i$ is an axial distance measured from a first inner measurement point ($p_{i1}$) on the inner corrugation (11) where a tangent ($t_{i1}$) to a meridian along the bellows member (2) extends at 30 degrees to the axis of the bellows member (2), to a second inner measurement point ($p_{i2}$) on the inner corrugation (11) where a tangent (ti2) to the meridian extends at -30 degrees to the axis of the bellows member (2); and
   $L_o$ is an axial distance measured from a first outer measurement point ($p_{o1}$) on the outer corrugation (12) where a tangent ($t_{o1}$) to the meridian extends at 30 degrees to the axis of the bellows member (2), to a second outer measurement point ($p_{o1}$) on the outer corrugation (12) where a tangent ($t_{o2}$) to the meridian extends at -30 degrees to the axis of the bellows member (2), **characterized in that**
   A has a value below 0.8 and greater than 0.6.

2. A bellows member (2) according to claim 1, wherein the slope of the meridian changes smoothly and monotonically between the first and second inner measurement points ($p_{i1}$, $p_{i2}$), and between the first and second outer measurement points ($p_{o1}$, $p_{o2}$).

3. A bellows member (2) according to claims 1 or 2, wherein between the first and second inner measurement points ($p_{i1}$, $p_{i2}$), the meridian does not come within a minimum inner radial distance from an inner center point ($c_i$), or extend beyond a maximum inner radial distance from the inner center point ($c_i$), where:

   the inner center point ($c_i$) is where a first inner radius extending orthogonal to the meridian at the first inner measurement point ($p_{i1}$) intersects a second inner radius extending orthogonal to the meridian at the second inner measurement point ($p_{i2}$),
   the minimum inner radial distance is 85% of the distance from the first inner measurement point ($p_{i1}$) to the inner center point ($c_i$); and
   the maximum inner radial distance is 110% of the distance from the first inner measurement point ($p_{i1}$) to the inner center point ($c_i$).

4. A bellows member (2) according to any one of claims 1 to 3, wherein between the first and second outer measurement points ($p_{o1}$, $p_{o2}$), the meridian does not come within a minimum outer radial distance from an outer center point ($c_o$), or extend beyond a maximum outer radial distance from the outer center point ($c_o$), where:

   the outer center point ($c_o$) is where a first outer radius extending orthogonal to the meridian at the first outer measurement point ($p_{o1}$) intersects a second outer radius extending orthogonal to the meridian at the second outer measurement point ($p_{o2}$),
   the minimum outer radial distance is 85% of the distance from the first outer measurement point ($p_{o1}$) to the outer center point ($c_o$); and
   the maximum outer radial distance is 110% of the distance from the first outer measurement point ($p_{o1}$) to the outer center point ($c_o$).

5. A bellows member (2) according to any one of claims 1 to 4, wherein the closest distance between the inner corrugation (11) and the axis of the bellows member (2) less than 85% of the furthest distance between the outer corrugation (12) and the axis of the bellows member (2).

6. A bellows member (2) according to any one of claims 1 to 5, wherein the plurality of adjacent corrugations includes at least two inner corrugations (11) and two outer corrugations (12).

## Patentansprüche

1. Balgteil (2) für eine flexible Verbindung in einem Abgassystem, das aus dünnem Metallmaterial besteht und gewellt ist, um axiale und laterale Verformung auszugleichen, **wobei** in einem entspannten Zustand des Balgteils (2) für die Abmessungen jeder inneren Welle (11) und jeder benachbarten äußeren Welle (12) einer Vielzahl benachbarter Wellen (11, 12) die Gleichung $A = L_o/L_i$ gilt
   und dabei:

   $L_i$ ein axialer Abstand, gemessen von einem ersten inneren Messpunkt ($p_{i1}$) an der inneren Welle (11), an dem eine Tangente ($t_{i1}$) zu einem Meridian entlang des Balgteils (2) in einem Winkel von 30° zu der Achse des Balgteils (2) verläuft, zu einem zweiten inneren Messpunkt ($p_{i2}$) an der inneren Welle (11) ist, an dem eine Tangente ($t_{i2}$) zu dem Meridian in einem Winkel von -30° zu der Achse des Balgteils (2) verläuft; und
   $L_o$ ein axialer Abstand, gemessen von einem ersten äußeren Messpunkt ($p_{o1}$) an der äußeren Welle (12), an dem eine Tangente ($t_{o1}$) zu dem

Meridian in einem Winkel von 30° zu der Achse des Balgteils (2) verläuft, zu einem zweiten äußeren Messpunkt ($p_{o1}$) an der äußeren Welle (12) ist, an dem eine Tangente ($t_{o2}$) zu dem Meridian in einem Winkel von -30° zu der Achse des Balgteils (2) verläuft,
**dadurch gekennzeichnet, dass**
A einen Wert unter 0,8 und über 0,6 hat.

2. Balgteil (2) nach Anspruch 1, wobei sich die Neigung des Meridians zwischen dem ersten und dem zweiten inneren Messpunkt ($p_{i1}$, $p_{i2}$) und zwischen dem ersten und dem zweiten äußeren Messpunkt ($p_{o1}$, $p_{o2}$) allmählich und monoton ändert.

3. Balgteil (2) nach Anspruch 1 oder 2, wobei zwischen dem ersten und dem zweiten inneren Messpunkt ($p_{i1}$, $p_{i2}$) der Meridian nicht innerhalb eines minimalen inneren radialen Abstandes zu einem inneren Mittelpunkt ($c_i$) liegt oder sich über einen maximalen inneren radialen Abstand zu dem inneren Mittelpunkt ($c_i$) hinaus erstreckt und dabei:

der innere Mittelpunkt ($c_i$) dort liegt, wo ein erster Innenradius, der rechtwinklig zu dem Meridian an dem ersten inneren Messpunkt ($p_{i1}$) verläuft, einen zweiten Innenradius schneidet, der rechtwinklig zu dem Meridian an dem zweiten inneren Messpunkt ($p_{i2}$) verläuft,
der minimale innere radiale Abstand 85% des Abstandes von dem ersten inneren Messpunkt ($p_{i1}$) zu dem inneren Mittelpunkt ($c_i$) beträgt; und der maximale innere radiale Abstand 110% des Abstandes von dem ersten inneren Messpunkt ($p_{i1}$) zu dem inneren Mittelpunkt ($c_i$) beträgt.

4. Balgteil (2) nach einem der Ansprüche 1 bis 3, wobei zwischen dem ersten und dem zweiten äußeren Messpunkt ($p_{o1}$, $p_{o2}$) der Meridian nicht innerhalb eines minimalen äußeren radialen Abstandes zu einem äußeren Mittelpunkt ($c_o$) liegt oder sich über einen maximalen äußeren radialen Abstand zu dem äußeren Mittelpunkt ($c_o$) hinaus erstreckt und dabei:

der äußere Mittelpunkt ($c_o$) dort liegt, wo ein erster Außenradius, der rechtwinklig zu dem Meridian an dem ersten äußeren Messpunkt ($p_{o1}$) verläuft, einen zweiten Außenradius schneidet, der rechtwinklig zu dem Meridian an dem zweiten äußeren Messpunkt ($p_{o2}$) verläuft,
der minimale äußere radiale Abstand 85% des Abstandes von dem ersten äußeren Messpunkt ($p_{o1}$) zu dem äußeren Mittelpunkt ($c_o$) beträgt; und
der maximale äußere radiale Abstand 110% des Abstandes von dem ersten äußeren Messpunkt ($p_{o1}$) zu dem äußeren Mittelpunkt ($c_o$) beträgt.

5. Balgteil (2) nach einem der Ansprüche 1 bis 4, wobei der kürzeste Abstand zwischen der inneren Welle (11) und der Achse des Balgteils (2) weniger als 85 % des längsten Abstandes zwischen der äußeren Welle (12) und der Achse des Balgteils (2) beträgt.

6. Balgteil (2) nach einem der Ansprüche 1 bis 5, wobei die Vielzahl benachbarter Wellen wenigstens zwei innere Wellen (11) und zwei äußere Wellen (12) einschließt.

**Revendications**

1. Tube ondulé (2) pour une connexion flexible dans un système d'échappement, fabriqué en un matériau métallique mince et ondulé pour absorber les déformations axiales et latérales, où, dans un état détendu du tube ondulé (2), les dimensions de chaque ondulation intérieure (11) et de chaque ondulation extérieure adjacente (12) dans plusieurs ondulations adjacentes (11, 12) satisfont l'équation

$$A = Lo/Li$$

où :

Li est une distance axiale mesurée à partir d'un premier point de mesure intérieur (pi1) sur l'ondulation interne (11) où une tangente (ti1) à un méridien le long du tube ondulé (2) s'étend à 30 degrés vers l'axe du tube ondulé (2), à un second point de mesure intérieur (pi2) sur l'ondulation interne (11) où une tangente (ti2) au méridien s'étend à - 30 degrés par rapport à l'axe du tube ondulé (2); et
Lo est une distance axiale mesurée à partir d'un premier point de mesure intérieur (pi1) sur l'ondulation interne (11) où une tangente (to1) à un méridien le long du tube ondulé (2) s'étend à 30 degrés vers l'axe du tube ondulé (2), vers un second point de mesure extérieur (po1) sur l'ondulation extérieur (112 où une tangente (to2) au méridien s'étend à -30 degrés à l'axe du tube ondulé (2), **caractérisé en ce que**
A a une valeur inférieure à 0,8 et supérieure à 0,6.

2. Tube ondulé (2) selon la revendication 1, dans lequel la pente du méridien change de façon douce et monotone entre le premier point de mesure intérieur et le second point de mesure intérieur (pi1, pi2), et entre le premier second point de mesure extérieur et le second point de mesure extérieur (po1, Po2).

3. Tube ondulé (2) selon les revendications 1 ou 2, dans lequel, entre le premier point de mesure intérieur et le second point de mesure intérieur (pi1, pi2), le méridien ne se trouve pas à une distance radiale intérieure minimale d'un point central intérieur (ci), ni ne s'étend au-delà d'une distance radiale intérieure maximale du point central intérieur (ci), où:

le point central intérieur (ci) est où un premier rayon intérieur s'étendant au droit du méridien au premier point de mesure intérieur (pi1) coupe un second rayon intérieur s'étendant au droit du méridien du second point de mesure intérieur (pi2),

la distance radiale intérieure minimale est de 85 % de la distance entre le premier point de mesure intérieur (pi1) et le point central intérieur (ci); et

la distance radiale intérieure maximale est de 110% de la distance entre le premier point de mesure intérieur (pn) et le point central intérieur (ci).

4. Tube ondulé (2) selon les revendications 1 ou 3, dans lequel, entre le premier point de mesure extérieur et le second point de mesure extérieur (po1, po2), le méridien ne se trouve pas à une distance radiale intérieure minimale d'un point central extérieur (co), ni ne s'étend au-delà d'une distance radiale extérieure maximale du point central intérieur (ci), où:

le point central extérieur (Co) est où un premier rayon extérieur s'étendant au droit du méridien au premier point de mesure extérieur (po1) coupe un second rayon extérieur s'étendant au droit du méridien au second point de mesure extérieur (po2),

la distance radiale intérieure minimale est de 85 % de la distance entre le premier point de mesure extérieur (po1) et le point central extérieur (Co); et

la distance radiale extérieure minimale est de 110% de la distance entre le premier point de mesure extérieur (po1) et le point central extérieur (Co).

5. Tube ondulé (2) selon l'une quelconque des revendications 1 à 4, dans lequel la distance la plus proche entre l'ondulation intérieure (11) et l'axe du tube ondulé (2) est inférieure à 85% de la distance la plus longue entre l'ondulation extérieure (12) et l'axe du tube ondulé (2).

6. Tube ondulé (2) selon l'une quelconque des revendications 1 à 5, dans lequel la pluralité d'ondulations adjacentes comprend au moins deux ondulations intérieures (11) et deux ondulations extérieures (12).

FIG. 1

EP 3 339 599 B1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 29520430 U1
- JP 2006336587 A
- EP 2450546 A1
- JP H08303240 A
- JP H09208748 A